# FASCICULE DE BREVET EUROPEEN

(11) **EP 1 071 887 B1**
(45) Date de publication et mention de la délivrance du brevet: **18.12.2002**
(21) Numéro de dépôt: 99913416.6
(22) Date de dépôt: 15.04.1999
(51) Int. Cl.: F16B 45/02, B60T 7/06, E04G 5/04

(54) **DISPOSITIF D'ASSEMBLAGE ET DE DESASSEMBLAGE RAPIDE**
VORRICHTUNG ZUM SCHNELLEN MONTIEREN UND DEMONTIEREN
QUICK ASSEMBLING AND DISASSEMBLING DEVICE

(30) Priorité: 24.04.1998 FR 9805115
(43) Date de publication de la demande: 31.01.2001
(73) Titulaire: Bosch Systemes de Freinage, 93700 Drancy (FR)
(72) Inventeur: GAUTIER, Jean-Pierre, F-93600 Aulnay-sous-Bois (FR); ANTHERIEU, Frédéric, F-94120 Fontenay-sous-Bois (FR); LEBOISNE, Cédric, F-75011 Paris (FR)
(74) Mandataire: Hurwic, Aleksander Wiktor
(86) Numéro de dépôt international: FR9900883
(87) Numéro de publication internationale: WO99056025

(56) Documents cités:
- DE-U- 9 410 465
- GB-A- 1 044 762
- GB-A- 1 403 884
- US-A- 1 352 982

## Description

La présente invention concerne un dispositif d'assemblage et de désassemblage rapide de deux pièces.

Plus précisément, l'invention concerne un dispositif du type de ceux qui comprennent une agrafe solidaire d'une première des deux pièces et une attache solidaire d'une seconde des deux pièces et disposée transversalement par rapport à une première direction, l'agrafe comprenant une chape de guidage présentant une encoche de guidage orientée suivant la première direction, une chape de retenue présentant une encoche de retenue, et des moyens de blocage, la chape de retenue étant montée sélectivement pivotante sur la chape de guidage, l'attache étant simultanément insérable, pour une configuration d'ouverture de l'agrafe, dans les encoches de guidage et de retenue, par un mouvement dirigé suivant la première direction et vers un fond de l'encoche de guidage, une insertion de l'attache dans l'agrafe provoquant un pivotement de la chape de retenue entre une position de déverrouillage, qui correspond à la configuration d'ouverture de l'agrafe et pour laquelle l'encoche de retenue est orientée obliquement par rapport à la première direction, et une position de verrouillage, qui correspond à une configuration de fermeture de l'agrafe et pour laquelle l'encoche de retenue est orientée transversalement par rapport à la première direction, les moyens de blocage autorisant spontanément un passage de l'agrafe de sa configuration d'ouverture à sa configuration de fermeture, et n'autorisant un passage inverse que de façon sélective.

Des dispositifs de ce type sont bien connus dans l'art antérieur, tel qu'illustré par exemple par le brevet GB - 1 044 762.

De façon générale, ces dispositifs sont utilisés pour des applications très particulières, et dans des produits d'usage peu courants, de sorte qu'ils peuvent, sans inconvénient économique, présenter une complexité élevé.

L'invention vise au contraire à adapter un dispositif de ce type à des applications exigeant une production en grande série, et a donc pour but d'optimiser la structure d'un tel dispositif pour le rendre facile à fabriquer et peu coûteux, l'invention trouvant une application privilégiée dans l'assemblage de systèmes de transmission de la force de freinage pour véhicules automobiles.

A cette fin, le dispositif de l'invention, par ailleurs conforme à la définition qu'en donne le préambule ci-dessus, est essentiellement caractérisé en ce que les moyens de blocage comprennent au moins un premier ergot porté par une première des deux chapes et saillant en direction d'une seconde de ces chapes, et au moins un logement correspondant prévu sur la seconde chape pour recevoir le premier ergot, un défaut d'engagement du premier ergot dans le logement correspondant provoquant, pour l'une des deux chapes au moins, une déformation élastique qui se résorbe par engagement de ce premier ergot dans le logement correspondant, et en ce que le premier ergot est engagé dans le logement correspondant pour la configuration de fermeture de l'agrafe, et seulement pour cette configuration.

De préférence, la chape de retenue est montée pivotante autour d'un pivot supporté par la chape de guidage, et chaque chape comprend des première et seconde joues, parallèles et réunies l'une à l'autre, le premier ergot et le logement correspondant étant prévus sur des joues en vis-à-vis des deux chapes.

Dans ce cas, la chape de retenue est avantageusement montée à l'intérieur de la chape de guidage et les joues de la chape de retenue présentent des pattes qui dépassent de la chape de guidage dans la configuration de fermeture de l'agrafe, les joues de la chape de retenue pouvant ainsi être rapprochées par pincement pour permettre à chaque ergot de se dégager du logement correspondant.

En outre, la chape de retenue peut comporter une languette élastique qui est disposée entre les première et seconde joues de la chape de retenue, perpendiculairement à ces joues, et qui, dans la configuration de fermeture de l'agrafe, sollicite élastiquement l'attache vers le fond de l'encoche de guidage.

L'efficacité du dispositif de l'invention est encore améliorée en donnant au premier ergot un profil en pente se terminant par un bord abrupt et en prévoyant que le bord abrupt pénètre en dernier dans le logement lorsque le premier ergot est engagé dans le logement correspondant par rotation de la chape de retenue de sa position de déverrouillage vers sa position de verrouillage.

Dans l'application privilégiée de l'invention, la première pièce est une tige de commande d'un système de freinage et la seconde pièce est une pédale de frein, la tige de commande s'étendant suivant la première direction, et l'attache étant constituée par un axe fixé à la pédale de frein

D'autres caractéristiques et avantages de l'invention ressortiront clairement de la description qui en est faite ci-après, à titre indicatif et nullement limitatif en référence aux dessins annexés, dans lesquels :
- La Figure 1 est une vue en perspective trois-quarts arrière d'un dispositif conforme à l'invention, avant assemblage;
- La Figure 2 est une vue latérale du dispositif de la Figure 1;
- La Figure 3 est une vue en perspective trois-quarts arrière d'un dispositif conforme à l'invention, après assemblage;
- La Figure 4 est une vue latérale du dispositif de la Figure 3;
- La Figure 5 est une vue arrière du dispositif des Figures 1 et 2;
- La Figure 6 est une vue arrière du dispositif des Figures 3 et 4;
- La Figure 7 est une vue en perspective de la chape de guidage;
- La Figure 8 est une vue en perspective de la chape de retenue;
- La Figure 9 est une vue en coupe partielle d'un système de transmission de force de freinage, utilisant un dispositif conforme à l'invention, avant assemblage; et
- La Figure 10 est une vue en coupe partielle d'un système de transmission de force de freinage, utilisant un dispositif conforme à l'invention, après assemblage.

Comme indiqué précédemment, l'invention concerne un dispositif permettant l'assemblage et de désassemblage rapide de deux pièces 1 et 2, ce dispositif comprenant, de façon connue en soi, une agrafe 3 solidaire de la première pièce 1 et une attache 4 solidaire de la seconde pièce 2, l'agrafe 3 étant elle-même essentiellement constituée d'une chape de guidage 31, d'une chape de retenue 32, et d'organes supplémentaires tels que 51, 61, 52, 62 et 323, qui font plus spécifiquement l'objet de la présente invention.

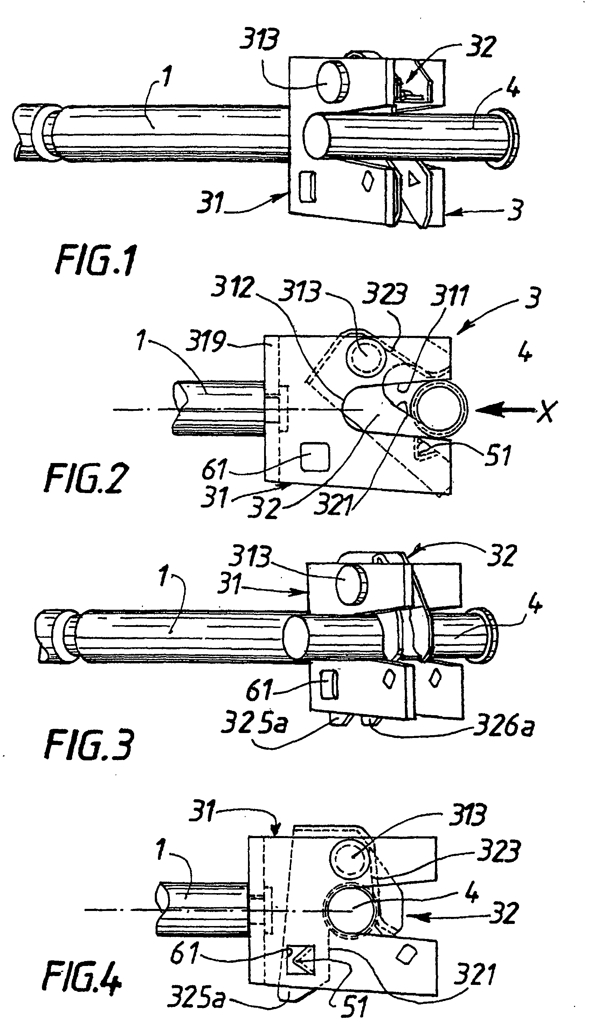

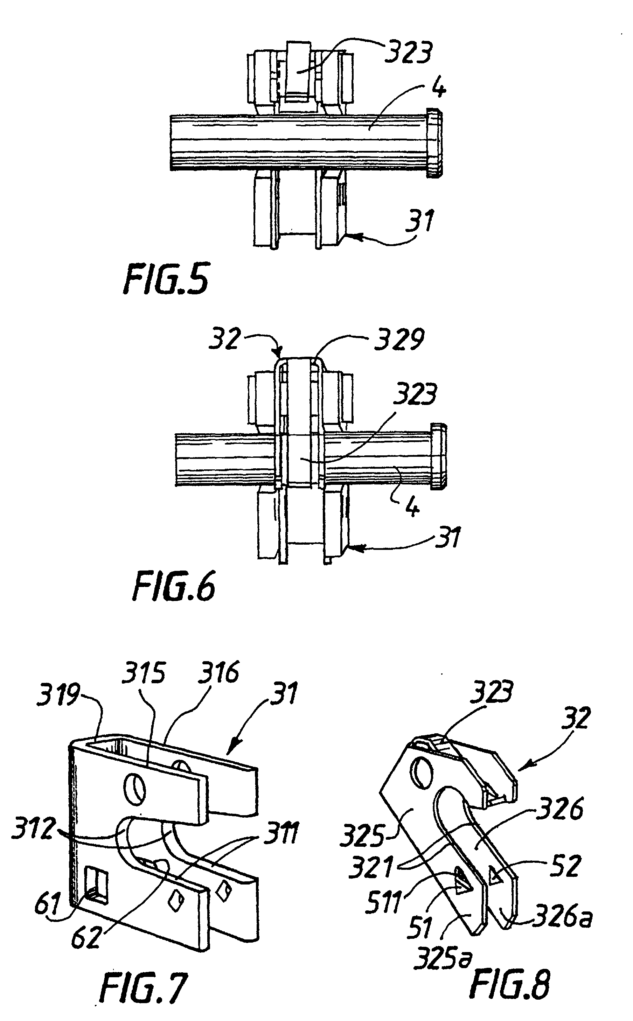

L'agrafe 3 est susceptible d'adopter sélectivement une configuration d'ouverture, illustrée aux figures 1, 2, 5, et 9, et dans laquelle elle ne retient pas l'attache 4, et une configuration de fermeture, illustrée aux figures 3, 4, 6, et 10, et dans laquelle elle retient l'attache 4 prisonnière.

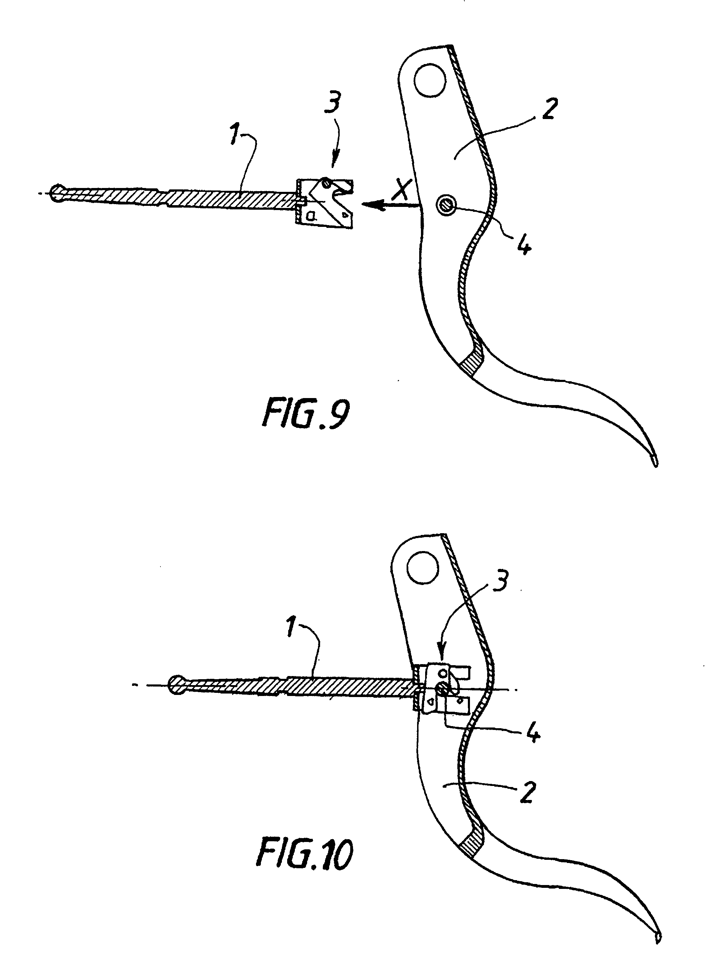

Le passage de la configuration d'ouverture à la configuration de fermeture est obtenu en insérant l'attache 4 dans l'agrafe 3 suivant une direction d'assemblage X (voir figures 2 et 9), l'attache 4 étant disposée transversalement par rapport à cette direction X et prenant par exemple la forme d'un axe fixé à une pédale de frein, cette dernière constituant la seconde pièce 2 à assembler.

La chape de guidage 31 présente une encoche de guidage 311 orientée suivant la direction X, la chape de retenue 32 présentant elle-même une encoche de retenue 321, et étant montée sélectivement pivotante sur la chape de guidage 31, autour d'un pivot 313 supporté par cette chape de guidage 31.

Dans la configuration d'ouverture de l'agrafe, l'encoche de retenue 321 est orientée obliquement par rapport à la direction d'assemblage X (figure 2) tout en permettant à l'attache 4 d'être simultanément insérée dans les encoches de guidage et de retenue 311 et 321 par un mouvement dirigé suivant la direction d'assemblage X et vers le fond 312 de l'encoche de guidage 31.

En raison de l'orientation oblique de l'encoche de retenue 321 dans la configuration d'ouverture de l'agrafe, l'insertion de l'attache 4 dans l'agrafe 3 provoque un pivotement de la chape de retenue 32 depuis une position de déverrouillage, qui correspond à la configuration d'ouverture de l'agrafe, jusqu'à une position de verrouillage, qui correspond à une configuration de fermeture de l'agrafe et pour laquelle l'encoche de retenue 321 est orientée transversalement par rapport à la direction d'assemblage X (voir figure 4).

Des organes de blocage tels que 51, 61 52, et 62 sont par ailleurs prévus pour autoriser le passage de l'agrafe 3 de sa configuration d'ouverture à sa configuration de fermeture, et pour interdire le passage inverse, au moins en l'absence d'une manipulation spécifique.

Selon l'invention, ces organes de blocage comprennent essentiellement au moins un ergot tel que 51 ou 52, porté par l'une des deux chapes, par exemple la chape de retenue 32, et saillant en direction de l'autre chape, en l'occurrence la chape de guidage 31, ainsi qu'au moins un logement correspondant, tel que 61 ou 62, prévu sur cette autre chape, en l'occurrence 31, pour recevoir l'ergot 51 ou 52 auquel correspond ce logement.

Par ailleurs, comme le montre la figure 4, l'ergot 51, et plus généralement chaque ergot 51, 52, se trouve engagé dans le logement correspondant 61, 62 pour la configuration de fermeture de l'agrafe, et seulement pour cette configuration, le fait que l'agrafe ne trouve pas dans sa configuration de fermeture étant donc équivalent au fait qu'un ergot 51 ou 52 ne trouve pas engagé dans le logement correspondant 61 ou 62.

Or, les chapes 31, 32 et l'ergot 51 sont dimensionnés de façon telle que le fait, pour un ergot 51 ou 52, de ne pas être engagé dans le logement correspondant 61 ou 62 provoque, pour l'une au moins des deux chapes 31, 32, une déformation élastique qui ne peut se résorber que par engagement de cet ergot 51, 52 dans le logement correspondant 61, 62.

Grâce à ces caractéristiques, l'agrafe 3 présente donc un état de contrainte minimal lorsqu'elle se trouve dans sa configuration de fermeture, ce qui confère à cette configuration la stabilité nécessaire pour éviter un passage spontané de l'agrafe de sa configuration de fermeture à sa configuration d'ouverture.

Chaque chape 31, 32 comprend par exemple deux joues 315, 316 et 325, 326, parallèles et réunies l'une à l'autre par un pont 319, 329, et chaque ergot 51, 52 ainsi que le logement correspondant 61, 62 sont prévus sur des joues en vis-à-vis 315, 325 et 316, 326 des deux chapes 31, 32.

La chape de retenue 32 est avantageusement réalisée en un matériau élastique, par exemple un acier à ressort, et montée à l'intérieur de la chape de guidage 31.

Dans ces conditions, la chape de retenue 32 se trouve soumise à une contrainte élastique qui provoque le rapprochement de ses joues 325, 326, aussi longtemps que les ergots 51, 52 ne sont pas engagés dans les logements 61, 62, c'est-à-dire aussi longtemps que l'agrafe n'est pas dans sa configuration de fermeture.

Les joues 325, 326 de la chape de retenue 32 présentent de préférence des pattes 325a, 326a qui dépassent de la chape de guidage 31 dans la configuration de fermeture de l'agrafe, les joues 325, 326 de la chape de retenue 32 pouvant ainsi être rapprochées par pincement pour permettre à chaque ergot 51, 52 de se dégager du logement correspondant 61, 62.

La chape de retenue 32 peut en outre comporter une languette élastique 323 qui est disposée entre les joues 325, 326 de cette chape 32, perpendiculairement aux joues 325, 326, et qui, dans la configuration de fermeture de l'agrafe, sollicite élastiquement l'attache vers le fond 312 de l'encoche de guidage 311 jusqu'à lui faire toucher ce fond ou la coincer dans l'encoche de guidage.

Comme le montre le mieux la figure 8, chaque ergot 51, 52 a de préférence un profil en pente se terminant par un bord abrupt tel que 511, et ce bord 511 pénètre en dernier dans le logement correspondant 61 lorsque cet ergot 51 est engagé dans ce logement 61 par rotation de la chape de retenue 32 de sa position de déverrouillage vers sa position de verrouillage.

Dans son application privilégiée, illustrée aux figures 9 et 10, le dispositif de l'invention permet d'assembler rapidement la tige de commande d'un système de freinage, qui constitue la première pièce 1 à assembler et qui s'étend suivant la direction d'assemblage X, à une pédale de frein, qui constitue la seconde pièce 2 à assembler, l'attache 4 prenant la forme d'un axe transversal fixé à la pédale de frein.

## Revendications

1. Dispositif d'assemblage et de désassemblage rapide de deux pièces, comprenant une agrafe (3) solidaire d'une première (1) des deux pièces et une attache (4) solidaire d'une seconde (2) des deux pièces et disposée transversalement par rapport à une première direction (X), l'agrafe (3) comprenant une chape de guidage (31) présentant une encoche de guidage (311) orientée suivant la première direction (X), une chape de retenue (32) présentant une encoche de retenue (321), et des moyens de blocage (51, 61; 52, 62), la chape de retenue (32) étant montée sélectivement pivotante sur la chape de guidage (31), l'attache (4) étant simultanément insérable, pour une configuration d'ouverture de l'agrafe, dans les encoches de guidage et de retenue (311, 321), par un mouvement dirigé suivant la première direction (X) et vers un fond (312) de l'encoche de guidage (31), une insertion de l'attache (4) dans l'agrafe (3) provoquant un pivotement de la chape de retenue (32) entre une position de déverrouillage, qui correspond à la configuration d'ouverture de l'agrafe et pour laquelle l'encoche de retenue (321) est orientée obliquement par rapport à la première direction (X), et une position de verrouillage, qui correspond à une configuration de fermeture de l'agrafe et pour laquelle l'encoche de retenue (321) est orientée transversalement par rapport à la première direction (X), les moyens de blocage (51, 61; 52, 62) autorisant spontanément un passage de l'agrafe (3) de sa configuration d'ouverture à sa configuration de fermeture, et n'autorisant un passage inverse que de façon sélective, **caractérisé en ce que** les moyens de blocage (51, 61; 52, 62) comprennent au moins un premier ergot (51) porté par une première des deux chapes (31, 32) et saillant en direction d'une seconde de ces chapes (32, 31), et au moins un logement correspondant (61) prévu sur la seconde chape (32, 31) pour recevoir le premier ergot (51), un défaut d'engagement du premier ergot (51) dans le logement correspondant (61) provoquant, pour l'une des deux chapes (31, 32) au moins, une déformation élastique qui se résorbe par engagement de ce premier ergot (51) dans le logement correspondant (61), **en ce que** le premier ergot (51) est engagé dans le logement correspondant (61) pour la configuration de fermeture de l'agrafe, et seulement pour cette configuration, **en ce que** la chape de retenue (32) est montée pivotante autour d'un pivot (313) supporté par la chape de guidage (31), **en ce que** chaque chape (31, 32) comprend des première et seconde joues (315, 316; 325, 326), parallèles et réunies l'une à l'autre, et **en ce que** le premier ergot (51) et le logement correspondant (61) sont prévus sur des joues en vis-à-vis (315, 325) des deux chapes (31, 32), **en ce que** la chape de retenue (32) est montée à l'intérieur de la chape de guidage (31) et **en ce que** les joues (325, 326) de la chape de retenue (32) présentent des pattes (325a, 326a) qui dépassent de la chape de guidage (31) dans la configuration de fermeture de l'agrafe, les joues (325, 326) de la chape de retenue (32) pouvant ainsi être rapprochées par pincement pour permettre à chaque ergot (51, 52) de se dégager du logement correspondant (61, 62).

2. Dispositif d'assemblage et de désassemblage suivant la revendications 1 **caractérisé en que** la chape de retenue (32) comporté une languette élastique (323) qui est disposée entre les première et seconde joues (325, 326) de la chape de retenue (32), perpendiculairement à ces joues, et qui, dans la configuration de fermeture de l'agrafe, sollicite élastiquement l'attache vers le fond (312) de l'encoche de guidage (311).

3. Dispositif d'assemblage et de désassemblage suivant l'une quelconque des revendications précédentes, **caractérisé en que** le premier ergot (51) a un profil en pente se terminant par un bord abrupt (511) et en ce que le bord abrupt (511) pénètre en dernier dans le logement (61) lorsque le premier ergot (51) est engagé dans le logement correspondant (61) par rotation de la chape de retenue (32) de sa position de déverrouillage vers sa position de verrouillage.

4. Dispositif d'assemblage et de désassemblage suivant l'une quelconque des revendications précédentes, **caractérisé en que** la première pièce (1) est une tige de commande d'un système de freinage, cette tige s'étendant suivant la première direction, en ce que la seconde pièce (2) est une pédale de frein, et en ce que l'attache (4) est un axe fixé à la pédale de frein.

## Claims

1. Device for the quick assembly and disassembly of two parts, comprising a clasp (3) secured to a first (1) of the two parts and a fastener (4) secured to a second (2) of the two parts and arranged transversely with respect to a first direction (X), the clasp (3) comprising a guide yoke (31) which has a guide slot (311) oriented in the first direction (X), a retaining yoke (32) having a retaining slot (321), and blocking means (51, 61; 52, 62), the retaining yoke (32) being mounted so that it can be pivoted at will on the guide yoke (31), the fastener (4) being able, when the clasp is in an open configuration, to enter the guide and retaining slots (311, 321) simultaneously, in a movement in the first direction (X) and towards a closed end (312) of the guide slot (31 [sic]), insertion of the fastener (4) into the clasp (3) causing the retaining yoke (32) to pivot between an unlocked position which corresponds to the clasp-open configuration and for which the retaining slot (321) is oriented at an angle to the first direction (X), and a locked position which corresponds to a clasp-closed configuration and for which the retaining slot (321) is oriented transversely with respect to the first direction (X), the blocking means (51, 61; 52, 62) spontaneously allowing the clasp (3) to pass from its open configuration to its closed configuration and allowing passage in the opposite direction only selectively, **characterized in that** the blocking means (51, 61;52, 62) comprise at least a first lug (51) borne by a first of the two yokes (31, 32) and projecting towards a second of these yokes (32, 31), and at least one corresponding housing (61) provided in the second yoke (32, 31) for housing the first lug (51), a lack of engagement of the first lug (51) in the corresponding housing (61) causing, in the case of one of the two yokes (31, 32) at least, an elastic deformation which is taken back up by the engagement of this first lug (51) in the corresponding housing (61), **in that** the first lug (51) is engaged in the corresponding housing (61) for the clasp-closed configuration and only for this configuration, **in that** the retaining yoke (32) is mounted to pivot about a pivot (313) supported by the guide yoke (31), **in that** this yoke (31, 32) comprises first and second cheeks (315, 316;325, 326) which are parallel and joined together, and **in that** the first lug (51) and the corresponding housing (61) are provided on cheeks (315, 325) which face each other belonging to the two yokes (31, 32), **in that** the retaining yoke (32) is mounted inside the guide yoke (31) and **in that** the cheeks (325, 326) of the retaining yoke (32) have legs (325a, 326a) which extend beyond the guide yoke (31) in the clasp-closed configuration, it thus being possible for the cheeks (325, 326) of the retaining yoke (32) to be moved closer together by squeezing, in order to allow each lug (51, 52) to disengage from the corresponding housing (61, 62).

2. Assembly and disassembly device according to either one of Claims 1 and 2, **characterized in that** the retaining yoke (32) has an elastic tongue (323) which is arranged between the first and second cheeks (325, 326) of the retaining yoke (32), at right angles to these cheeks and which, in the clasp-closed configuration, elastically urges the fastener towards the closed end (312) of the guide slot (311).

3. Assembly and disassembly device according to any one of the preceding claims, **characterized in that** the first lug (51) has a sloping profile ending in an abrupt edge (511), and **in that** the abrupt edge (511) is last to enter the housing (61) when the first lug (51) is engaged in the corresponding housing (61) through the rotation of the retaining yoke (32) from its unlocked position into its locked position.

4. Assembly and disassembly device according to any one of the preceding claims, **characterized in that** the first part (1) is a rod for operating a braking system, this rod extending in the first direction, and **in that** the second part (2) is a brake pedal, and **in that** the fastener (4) is a spindle fixed to the brake pedal.

## Patentansprüche

1. Vorrichtung zur schnellen Montage und Demontage von zwei Teilen mit einer Klammer (3), die mit einem ersten (1) der beiden Teile fest verbunden ist, und einem Verbindungsstück (4), das mit einem zweiten (2) der beiden Teile fest verbunden ist und quer bezüglich einer ersten Richtung (X) angeordnet ist, wobei die Klammer (3) eine Führungsgabel (31), die einen Führungseinschnitt (311) aufweist, der in der ersten Richtung (X) orientiert ist, eine Haltegabel (32), die einen Halteeinschnitt (321) aufweist, und Blockierungsmittel (51, 61; 52, 62) aufweist, wobei die Haltegabel (32) selektiv drehbar an der Führungsgabel (31) montiert ist, wobei das Verbindungsstück (4) für eine Öffnungsanordnung der Klammer gleichzeitig in den Führungs- und den Halteeinschnitt (311, 321) durch eine Bewegung einfügbar ist, die in die erste Richtung (X) und zu einem Boden (312) des Führungseinschnitts (31) gerichtet ist, wobei eine Einfügung des Verbindungsstücks (4) in die Klammer (3) eine Drehung der Haltegabel (32) zwischen einer Entriegelungsposition, die der Öffnungsanordnung der Klammer entspricht und für die der Halteeinschnitt (321) schräg bezüglich der ersten Richtung (X) orientiert ist, und einer Verriegelungsposition, die einer Schließanordnung der Klammer entspricht und für die der Halteeinschnitt (321) quer bezüglich der ersten Richtung (X) orientiert ist, hervorruft, wobei die Blockierungsmittel (51, 61; 52, 62) spontan einen Übergang der Klammer (3) von ihrer Öffnungsanordnung in ihre Schließanordnung gestatten und nur in selektiver Weise einen umgekehrten Übergang gestatten, **dadurch gekennzeichnet, daß** die Blockierungsmittel (51, 61; 52, 62) zumindest einen ersten Vorsprung (51), der von einer ersten der beiden Gabeln (31, 32) getragen wird und in der Richtung einer zweiten dieser Gabeln (32, 31) vorsteht, und zumindest eine entsprechende Aufnahme (61), die an der zweiten Gabel (32, 31) vorgesehen ist, um den ersten Vorsprung (51) aufzunehmen, umfassen, wobei ein Eingriffsfehler des ersten Vorsprungs (51) in die entsprechende Aufnahme (61) für zumindest eine der beiden Gabeln (31, 32) eine elastische Verformung hervorruft, die sich durch einen Eingriff dieses ersten Vorsprungs (51) in die entsprechende Aufnahme (61) verringert, daß der erste Vorsprung (51) für die Schließanordnung der Klammer und nur für diese Anordnung mit der entsprechenden Aufnahme (61) in Eingriff gebracht wird, daß die Haltegabel (32) drehbar um einen Drehzapfen (313) montiert ist, der von der Führungsgabel (31) getragen wird, daß jede Gabel (31, 32) eine erste und eine zweite Backe (315, 316; 325, 326) aufweist, die zueinander parallel und miteinander verbunden sind, und daß der erste Vorsprung (51) und die entsprechende Aufnahme (61) an gegenüberliegenden Backen (315, 325) der beiden Gabeln (31, 32) vorgesehen sind, daß die Haltegabel (32) im Inneren der Führungsgabel (31) montiert ist und daß die Backen (325, 326) der Haltegabel (32) Laschen (325a, 326a) aufweisen, die von der Führungsgabel (31) in der Schließanordnung der Klammer hervorstehen, wobei die Backen (325, 326) der Haltegabel (32) somit durch Klemmen aneinander angenähert werden können, um jedem Vorsprung (51, 52) zu ermöglichen, sich aus der entsprechenden Aufnahme (61, 62) zu lösen.

2. Vorrichtung zur Montage und Demontage nach Anspruch 1, **dadurch gekennzeichnet, daß** die Haltegabel (32) eine elastische Zunge (323) aufweist, die zwischen der ersten und der zweiten Backe (325, 326) der Haltegabel (32) senkrecht zu diesen Backen angeordnet ist, und die in der Schiießanordnung der Klammer das Verbindungsstück elastisch zum Boden (312) des Führungseinschnitts (311) beaufschlagt.

3. Vorrichtung zur Montage und Demontage nach einem der vorangehenden Ansprüche, **dadurch gekennzeichnet, daß** der erste Vorsprung (51) ein abfallendes Profil aufweist, das in einem schroffen Rand (511) endet, und daß der schroffe Rand (511) als letzter in die Aufnahme (61) eindringt, wenn der erste Vorsprung (51) durch Drehung der Haltegabel (32) aus ihrer Entriegelungsposition in ihre Verriegelungsposition mit der entsprechenden Aufnahme (61) in Eingriff gebracht wird.

4. Vorrichtung zur Montage und Demontage nach einem der vorangehenden Ansprüche, **dadurch gekennzeichnet, daß** das erste Teil (1) eine Steuerstange eines Bremssystems ist, wobei sich diese Stange in der ersten Richtung erstreckt, daß das zweite Teil (2) ein Bremspedal ist und daß das Verbindungsstück (4) eine am Bremspedal befestigte Achse ist.
